# EUROPÄISCHE PATENTSCHRIFT

(11) **EP 3 399 286 B1**
(45) Veröffentlichungstag und Bekanntmachung des Hinweises auf die Patenterteilung: **18.11.2020**
(21) Anmeldenummer: 17000757.9
(22) Anmeldetag: 03.05.2017
(51) Int. Cl.: G01G 9/00

(54) **VERFAHREN UND VORRICHTUNG ZUR QUANTITATIVEN MASSEBESTIMMUNG DES INHALTS VON GESCHLOSSENEN FOLIENVERPACKUNGEN**
METHOD AND DEVICE FOR QUANTITATIVE DETERMINATION OF THE MASS OF THE CONTENT OF CLOSED FILM PACKAGES
PROCÉDÉ ET DISPOSITIF DE DÉTERMINATION QUANTITATIVE DE MÉLANGE DU CONTENU D'EMBALLAGES SOUS FILM

(43) Veröffentlichungstag der Anmeldung: 07.11.2018
(73) Patentinhaber: Harro Höfliger Verpackungsmaschinen GmbH, 71573 Allmersbach im Tal (DE)
(72) Erfinder: SEYFANG, Karlheinz, 71573 Allmersbach im Tal (DE); LOBER, Martin, 71573 Allmersbach im Tal (DE); FAHRIAN, Joachim, 71573 Allmersbach im Tal (DE); RIMBACH, Jan, 99096 Erfurt (DE)
(74) Vertreter: Zurhorst, Stefan

(56) Entgegenhaltungen:
- WO-A1-2009/012097
- WO-A1-2012/013368
- DE-A1-102014 106 509

## Beschreibung

Die Erfindung betrifft ein Verfahren sowie eine Vorrichtung zur quantitativen Massebestimmung des Inhalts von geschlossenen Folienverpackungen, wobei die Folienverpackungen jeweils mindestens eine metallische Folienschicht aufweisen.

In der Verpackungstechnik müssen zunehmend Forderungen nach einer 100%igen In-Prozess-Kontrolle erfüllt werden. Dies beinhaltet auch die Möglichkeit, eine Aussage über den Füllgrad fertiggestellter und verschlossener Verpackungen treffen zu können, ohne die Verpackungen öffnen zu müssen.

Insbesondere bei kleinen Füllmengen beispielsweise von pharmazeutischen Pulvern oder dergleichen ist es einerseits schwierig, eine exakte und reproduzierbare Dosierung vorzunehmen, während es andererseits ebenso schwierig ist, die dosierten und abgefüllten Massen quantitativ zu bestimmen bzw. zu prüfen.

Der Einsatz von Röntgengeräten für eine In-Prozess-Füllkontrolle ist im Prinzip bekannt. Ein solcher Einsatz ist jedoch mit einer Reihe von Problemen behaftet. Eine Röntgenbildkette ist im Vergleich zu optischen Industriekameras relativ instabil. Schwankungen in Helligkeit, spektraler Verteilung und Abbildungsgeometrie sind vergleichsweise ausgeprägt. Eine automatisierte Interpretation der Durchleuchtungsergebnisse ist deshalb im Stand der Technik nur eingeschränkt möglich, was zu zwei verschiedenen Szenarien führt. In einem ersten Szenario werden nichtmetallische, für Röntgenstrahlen gut durchlässige Verpackungen durchleuchtet. Die entstehende Röntgensignatur kann fein genug aufgelöst sein, um eine quantitative Massenbestimmung des Inhalts vornehmen zu können. In einem zweiten Szenario werden Verpackungen mit einer oder mehreren metallischen Folienschichten durchleuchtet. Solche Verpackungen beispielsweise aus Aluminiumfolie haben eine sehr ausgeprägte Absorptionswirkung auf die durchtretenden Röntgenstrahlen, welche erheblich höher ist als die Absorptionswirkung des im Regelfall nichtmetallischen Verpackungsinhalts. Die Signatur des Durchleuchtungsbildes wird also von der metallischen Folie dominiert und durch den Verpackungsinhalt nur vergleichsweise gering beeinflusst. Das Durchleuchtungsergebnis lässt deshalb bestenfalls qualitative Aussagen zu, nämlich ob eine Füllung überhaupt vorhanden ist oder nicht. Quantitative Aussagen, also Aussagen über die Größe der Füllmasse, sind wegen der ausgeprägten Abschirmung seitens der metallischen Folie praktisch nicht möglich. Vereinfacht ausgedrückt kann zwar festgestellt werden, ob die metallische Folienverpackung eine Füllung enthält, nicht aber, ob die Füllung Abweichungen von der gewünschten Zielmasse aufweist.

Aus der DE 10 2014 106 509 A1 sind eine Vorrichtung und ein Verfahren bekannt, bei dem immer parallel zur Röntgenkontrolle mit einer Waage die Masse der Objekte bestimmt wird. Es werden mehrere Produkte einer endlichen Produktkette gemeinsam gewogen, was einer Anwendung in einem kontinuierlichen Endlosprozess entgegensteht. Außerdem ist das Gewicht der Folienverpackung in der Regel sehr viel kleiner als das Gewicht des darin abgefüllten Produkts.

In der genannten Druckschrift wird eine Kalibrierung derart durchgeführt, dass zeitliche Schwankungen der Röntgenquelle durch systemimmanente und äußere Einflüsse, z. B. Spannungsschwankungen berücksichtigt werden. In WO 2009/012097 A1 hingegen bezieht sich die dort beschriebene Kalibrierung auf die Erzeugung einer Korrelation zwischen Röntgenabsorption und Masse des Produkts durch Auswahl des gerade am besten passenden Algorithmus. In beiden Fällen bleibt ein Problem ungelöst: Wenn die Masse/Absorption des Füllguts gering ist im Vergleich zur Masse/Absorption des Packmittels, dann führen Schwankungen der Packmittelqualität während des Verpackungsprozesses, namentlich Schwankungen der Schichtdicke der Komponenten der Verbundfolien, zu deutlichen Messfehlern.

Der Erfindung liegt die Aufgabe zugrunde, ein Verfahren zur quantitativen Massebestimmung des Inhalts von geschlossenen Folienverpackungen anzugeben, welches auch einer Anwendung bei Verpackungen mit mindestens einer metallischen Folienschicht zugänglich ist.

Diese Aufgabe wird durch ein Verfahren mit den Merkmalen des Anspruchs 1 gelöst. Der Erfindung liegt des Weiteren die Aufgabe zugrunde, eine hierfür geeignete Vorrichtung anzugeben.

Diese Aufgabe wird durch eine Vorrichtung mit den Merkmalen des Anspruchs 5 gelöst.

Nach der Erfindung ist zunächst eine Kalibrierroutine vorgesehen, die dem nachfolgenden, laufenden Messbetrieb vorgeschaltet ist. In der Kalibrierroutine wird mindestens eine geschlossene erste Referenzverpackung, vorzugsweise ein ganzer Satz davon, ohne Inhalt hergestellt und mittels einer Röntgenquelle durchleuchtet. Mittels eines Röntgenbildgebers wird hiervon ein erster Satz von initialen Röntgenaufnahmen erstellt. Aus diesem ersten Satz von initialen Röntgenaufnahmen wird eine Massenkalibrier-Signatur abgeleitet.

Des Weiteren wird mindestens eine geschlossene zweite Referenzverpackung, bevorzugt ein ganzer Satz davon, diesmal aber mit jeweils einem Referenzinhalt hergestellt und mittels der Röntgenquelle durchleuchtet. Hiervon wird nun ein zweiter Satz von initialen Röntgenaufnahmen erstellt, woraus eine initiale Referenz-Signatur abgeleitet wird. Aus dieser initialen Referenz-Signatur und der weiter oben erwähnten Massenkalibier-Signatur wird durch Differenzbildung ein Referenz-Messwert abgeleitet.

Des Weiteren wird im Rahmen der Kalibrierroutine noch die Masse des Inhalts der mindestens einen zweiten Referenzverpackung durch Wiegen als Referenz-Masse quantitativ ermittelt und dem vorgenannten Referenz-Messwert zugeordnet. Hiernach wird die Kalibrierroutine abgeschlossen, und es folgt der laufende Messbetrieb.

Im laufenden Messbetrieb werden die zu prüfenden geschlossenen Folienverpackungen mit Inhalt mittels der Röntgenquelle durchleuchtet. Auch hiervon wird mindestens ein Satz von Röntgenaufnahmen erstellt, woraus eine Mess-Signatur abgeleitet wird. Aus der Mess-Signatur und der zuvor in der Kalibrierroutine ermittelten Massenkalibrier-Signatur werden durch Differenzbildung Messwerte für die einzelnen geschlossenen Folienverpackungen abgeleitet. Unter Berücksichtigung der ebenfalls in der Kalibrierroutine vorgenommenen Zuordnung von Referenz-Masse zum Referenz-Messwert können nun aus den Messwerten des laufenden Messbetriebes die Massen der Inhalte der geschlossenen Folienverpackungen nicht nur qualitativ, sondern auch quantitativ bestimmt werden.

Die Erfindung geht von der Erkenntnis aus, dass eine verlässliche quantitative Aussage über die Masse des Verpackungsinhalts dann getroffen werden kann, wenn der Einfluss der Folienverpackung in einer bestimmten Weise berücksichtigt und in ausreichendem Maß eliminiert wird. Als ein wesentliches Problem wurde erkannt, dass der Formungsprozess der metallischen Folie örtlich verteilten Toleranzen unterliegt. In einer Reihe oder Matrix von Formmulden und zugehörigen Stempeln erfolgt eine plastische Umformung der metallischen Folie zu Blisternäpfen oder dergleichen, die aufgrund von Maßtoleranzen zu leicht unterschiedlichem Fließverhalten der Folie im Bereich jeder einzelnen Formmulde führt. Dies wiederum hat bei den zugehörigen Einzelverpackungen individuell signifikante Röntgensignaturen zur Folge. Die individuellen Abweichungen sind aber reproduzierbar. Mit anderen Worten weist jeder Satz von Folienverpackungen, der aus einer Reihe oder Matrix von Formmulden stammt, eine vergleichbare Verteilung der individuell signifikanten Röntgensignaturen auf. Diese letztgenannte Verteilung wird nun während der Kalibrierroutine mittels der oben genannten Massenkalibrier-Signatur ermittelt. Im nachfolgenden laufenden Messbetreib wird sich bei den gefüllten und zu prüfenden Folienverpackungen eine vergleichbare Verteilung dieser für das Verpackungsmaterial individuell signifikanten Signatur einstellen. Als Konsequenz führt die nun vorgenommene Differenzbildung dazu, dass die allein vom Verpackungsmaterial erzeugten, in beiden Signaturen aber gleichermaßen vorhandenen Signaturverteilungen sich gegenseitig auslöschen. Im Ergebnis verschwindet ihr Einfluss bzw. wird auf ein handhabbares Maß reduziert. Stattdessen bleibt bei der Differenzbildung eine Signatur übrig, die als Messwert vollständig, zumindest aber größtenteils dem Verpackungsinhalt zugeordnet werden kann. Mittels der außerdem innerhalb der Kalibrierroutine vorgenommenen Zuordnung von Referenz-Masse zum Referenz-Messwert können nun aus den laufenden Messwerten sehr präzise quantitative Massenangaben zu den einzelnen Verpackungsfüllungen abgeleitet werden. Zusammenfassend gelingt also mit dem erfindungsgemäßen Verfahren und der erfindungsgemäßen Vorrichtung ein zuverlässiges Herausrechnen des örtlich variierenden Störeinflusses der metallischen Folie, so dass trotz dominanter Abschirmung seitens der metallischen Folie eine quantitative Massenbestimmung gelingt.

Der hier verschiedentlich verwendete Begriff des "Satzes" von Röntgenaufnahmen umfasst mindestens eine Einzelaufnahme. Bevorzugt beinhaltet ein solcher Satz jedoch mehrere Aufnahmen des jeweils gleichen Zustandes, die rechnerisch zu einer Gesamtaufnahme übereinander gelegt, also superponiert werden. Auf diese Weise können Bildrauschen und andere nachteilige Effekte gemindert werden.

Es kann ausreichen, das erfindungsgemäße Verfahren bzw. die erfindungsgemäße Vorrichtung auf Einzelverpackungen anzuwenden. Bevorzugt wird jedoch im laufenden Messbetrieb von mehreren insbesondere in Matrixform angeordneten Folienverpackungen gemeinsam ein Satz von Messenden Röntgenaufnahmen erstellt. In der vorangehenden Kalibrierroutine werden korrespondierend dazu zunächst von Referenzverpackungen mit und ohne Referenzinhalte, jedoch in gleicher Anzahl und in gleicher räumlicher Anordnung wie die Folienverpackungen, erste und zweite Sätze von initialen Röntgenaufnahmen erstellt. Hier kommen die Vorteile der Erfindung vollumfänglich zum Tragen: Innerhalb einer solchen Gruppe bzw. Reihe oder Matrix von Folienverpackungen variiert zwar die seitens der umgeformten Folie generierte Röntgensignatur und ist für jede Reihen- bzw. Matrixposition individuell. Die Unterschiede zwischen diesen individuell verschiedenen, in ihrer Verteilung aber immer wiederkehrenden Signaturen können jedoch durch die oben beschriebene Differenzbildung herausgerechnet werden, so dass trotz der individuell unterschiedlichen Verpackungen Messwerte abgeleitet werden können, die ihrerseits eindeutig auf den Füllgrad der einzelnen Verpackungen innerhalb des gesamten Satzes davon schließen lassen können.

In vorteilhafter Weiterbildung der Erfindung wird zu Beginn der Kalibrierroutine eine Kalibrierung der Bildkette mittels eines vorgeschalteten Satzes von Röntgenaufnahmen durchgeführt, welche ohne Zwischenlage von Referenzverpackungen bzw. Folien erstellt werden. Hierdurch werden verschiedene Eigenarten der Röntgenbildaufnahme berücksichtigt. Anders als bei üblichen optischen Bildaufnahmen erfolgt die Bildgebung bei Röntgenaufnahmen durch Zentralprojektion, bei der die Röntgenstrahlen von einer nahezu punktförmigen Strahlungsquelle ausgehen und auf den Röntgenbildgeber projiziert werden. Die auf dem ebenen Röntgenbildgeber auftreffende Strahlungsintensität ist abhängig vom Abstandsquadrat zur Strahlungsquelle. Dieses Abstandsquadrat ist wegen der Zentralprojektion in den Randbereichen des Röntgenbildgebers größer als im Mittenbereich, so dass sich eine ungleichmäßige Helligkeitsverteilung mit dunkleren Randbereichen und hellerem Mittenbereich ergibt. Grauwertverteilung und Grauwertkonvertierung sind über die Fläche des Röntgenbildgebers nicht homogen und unterliegen außerdem einer alterungsbedingten Drift. Diese nachteiligen Einflüsse können jedoch weitgehend durch die vorgenannte Kalibrierung der Bildkette, also auf Basis von Referenzaufnahmen von homogenen Flächen ohne Folien- bzw. Blister- oder Verpackungseinfluss unterdrückt werden.

Die einzelnen Folienverpackungen weisen Füllräume mit einer Grundfläche auf. Gemäß der Erfindung wird innerhalb dieser Grundfläche ein erstes Summensignal ermittelt. Außerdem wird außerhalb der Grundfläche, aber unmittelbar daran angrenzend im Randbereich der Folienverpackung ein zweites Summensignal ermittelt. Die verschiedenen Signaturen einschließlich der weiter oben schon erwähnten Mess-Signatur werden nun durch Differenzbildung zwischen dem ersten und dem zweiten Summensignal ermittelt. Hierdurch können weitere Störeinflüsse ausgeschlossen werden, was zu einer weiteren Verbesserung des Messergebnisses zur Massebestimmung führt. Es wurde nämlich beobachtet, dass die zentrale, nahezu punktförmige Röntgenstrahlungsquelle in Helligkeit und Position schwankt. Dies führt zu ständigen Änderungen in der Helligkeit, spektralen Verteilung und Abbildungsgeometrie. Die Röntgenbildkette ist also zeitlich relativ instabil, zumindest im Vergleich zu einer optischen Industriekamera mit LED-Beleuchtung. Auch die zum Einsatz kommenden Folien schwanken in der Materialstärke, was durch Schwankungen im Siegelprozess noch verstärkt wird. Es entstehen also zeitlich schwankende Einflüsse des Verpackungsmaterials, die zu den Schwankungen in der Bildgebung hinzukommen. Im Rahmen der Erfindung wird jedoch davon ausgegangen, dass diese Schwankungen zwar vorhanden sind, sich aber innerhalb kleiner räumlicher Erstreckungen gleichmäßig auswirken. Da nun das erste und das zweite Summensignal innerhalb der Grundfläche eines einzelnen Füllraumes sowie im unmittelbar daran angrenzenden Randbereich ermittelt werden, wirken sich die oben genannten zeitlichen Schwankungen für beide Summensignale im Wesentlichen gleich aus. Die nun folgende Differenzbildung zwischen den beiden Summensignalen eliminiert folglich die genannten Schwankungseinflüsse, so dass die Messwerte für die Massebestimmung des Verpackungsinhaltes hiervon befreit sind. Der vorstehend beschriebene Ansatz ist gleichermaßen für die Bestimmung der Massenkalibrier-Signatur, der Referenz-Signatur und der Mess-Signatur anwendbar.

Eine weitere Verbesserung wird nach der Erfindung dadurch erzielt, dass die ersten und zweiten Summensignale linearisiert werden. Dies vereinfacht insbesondere die Überführung der Mess-Signatur in einen Messwert für die Masse des Verpackungsinhaltes. Es entsteht nämlich ein linearer Zusammenhang zwischen der zu ermittelnden Masse und dem Wert der Mess-Signatur. Für eine entsprechende lineare Regressionsfunktion reicht also die Bestimmung zweier Punkte. Ein erster Punkt, nämlich ein Offset-Punkt wurde bereits an den ersten, leeren Referenzverpackungen ermittelt. Der zweite Punkt ergibt sich aus der initialen Referenz-. Signatur bzw. aus dem Referenz-Messwert nach Durchleuchtung der mit einer in ihrer Masse bekannten Füllung versehenen zweiten Referenzverpackung. Der erstgenannte Wert entspricht also einer Füllungsmasse gleich null, während der zweite genannte Wert einer bestimmten, durch Wiegen ermittelten Masse entspricht. Aufgrund des nun hergestellten linearen Zusammenhangs lässt sich durch lineare Interpolation oder durch lineare Extrapolation im laufenden Messbetrieb aus jedem beliebigen Messwert die zugehörige Füllungsmasse einfach und exakt ableiten.

Ein weiteres zu berücksichtigendes Problem besteht noch darin, dass die Folienbahnen bei der Verarbeitung von der Formstation durch die nachfolgende Füllstation und die ebenfalls nachfolgende Siegelstation bis hin zur Röntgen-Prüfstation gezogen werden. Dies führt dazu, dass die Lage der einzelnen Verpackungsfüllräume nicht immer exakt bekannt ist. Es werden deshalb initial Bildsignaturen abgeleitet, die charakteristisch für Form und Position der Grundflächen einzelner Folienverpackungen sind. Diese dienen als Referenz für ein sogenanntes "pattern matching", womit dann Positionsbestimmungen bzw. Positionskorrekturen bei der Ermittlung der ersten und zweiten Summensignale vorgenommen werden. Hierdurch lässt sich sicherstellen, dass die ersten Summensignale eindeutig den Füllräumen und die zweiten Summensignale eindeutig den umgebenden Randbereichen zugeordnet werden können.

Ein Ausführungsbeispiel der Erfindung ist nachfolgend anhand der Zeichnung näher beschrieben. Es zeigen:
- Fig. 1: in einer schematischen Blockdarstellung eine Form- und Füllanlage für Folienverpackungen mit einer integrierten erfindungsgemäßen Röntgenstation während einer initialen Kalibrierung der Bildkette;
- Fig. 2: die Anordnung nach Fig. 1 bei der Kalibrierroutine während der Ermittlung einer Massenkalibrier-Signatur an leeren Referenzverpackungen;
- Fig. 3: die Anordnung nach den Fig. 1 und 2 bei der Kalibrierroutine während der Ermittlung einer initialen Referenz-Signatur an gefüllten Referenzverpackungen, und
- Fig. 4: die Anordnung nach den Fig. 1 bis 3 im laufenden Produktions- und Messbetrieb bei einer Massenbestimmung der Verpackungsinhalte mittels der nach den Fig. 1 bis 3 kalibrierten Röntgenstation.

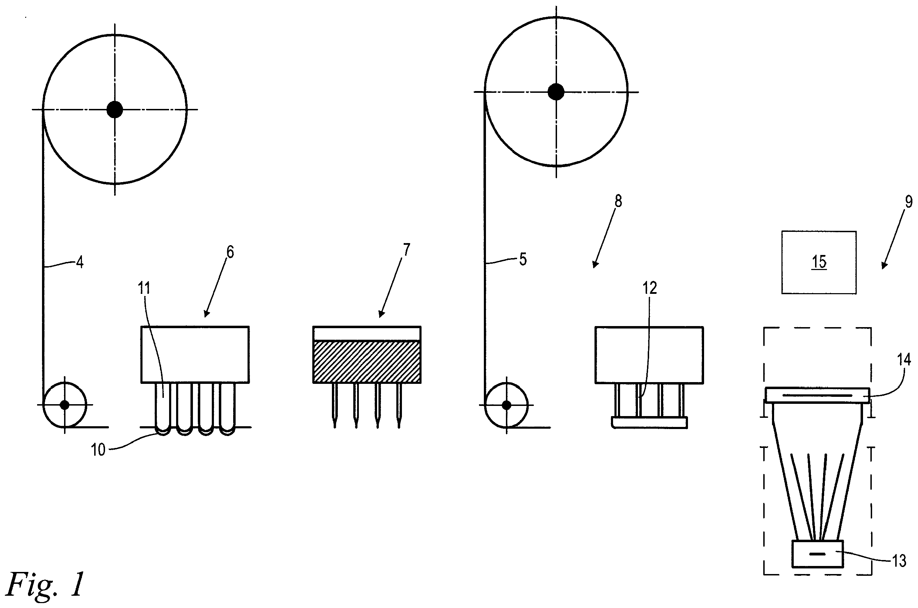

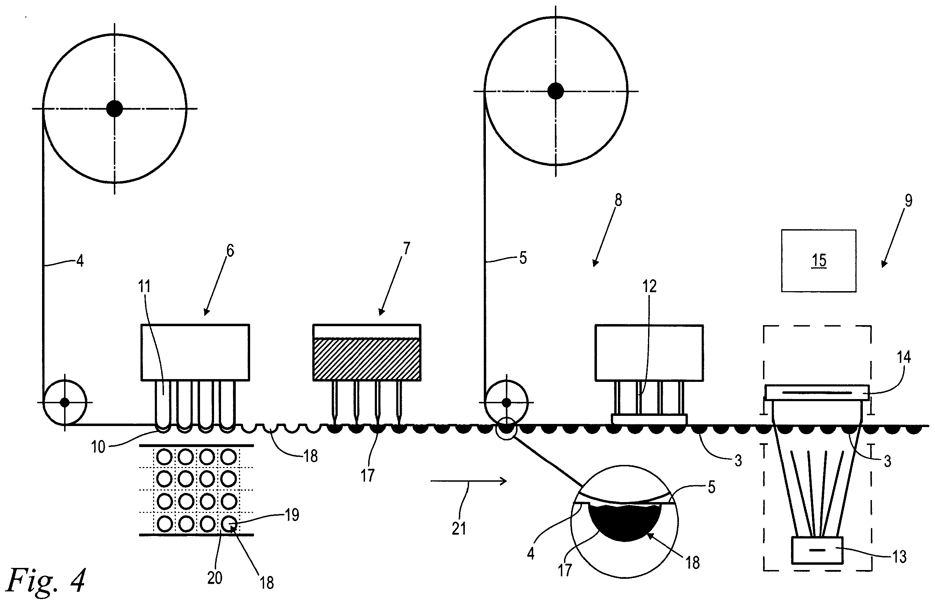

Die Fig. 1 bis 4 zeigen in einer schematischen Blockdarstellung eine Form- und Füllanlage für im Zusammenhang mit Fig. 4 beschriebenen Folienverpackungen 3. Diese Folienverpackungen 3 weisen jeweils mindestens eine, hier sogar zwei metallische Folienschichten (4, 5) auf und sind außerdem jeweils mit einem Inhalt 17 (Fig. 4) gefüllt. Hierbei kann es sich beispielsweise um pharmazeutische Pulver handeln. Es können aber auch andere Inhalte 17 berücksichtigt werden. Die hier gezeigte Anordnung dient neben der Herstellung der gefüllten Folienverpackungen 3 insbesondere auch einer 100%igen In-Prozess-Kontrolle durch quantitative Massebestimmung der einzelnen Inhalte 17 sämtlicher Folienverpackungen 3 mittels zerstörungsfreier Prüfung, die mittels der Erfindung trotz des problematischen Einflusses der mindestens einen metallischen Folienschicht 4, 5 vorgenommen werden kann.

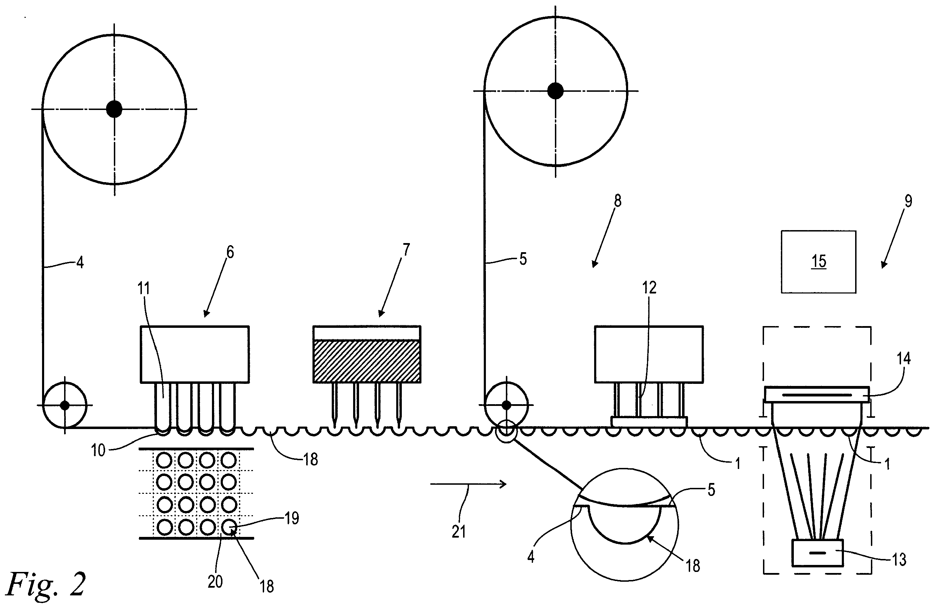

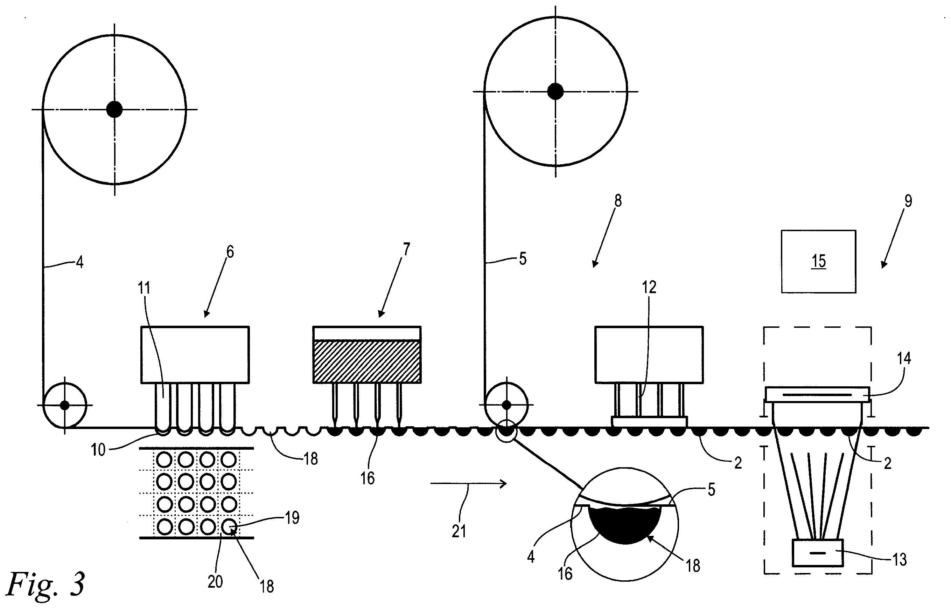

Die Anlage umfasst eine Formstation 6, eine Füllstation 7 und eine Siegelstation 8, deren Funktionen weiter unten im Zusammenhang mit den Fig. 2 und 3 beschrieben werden. Dem nachgeschaltet befindet sich ausgangsseitig der Siegelstation 8 eine Röntgenstation 9 mit einer Röntgenquelle 13 und einem Röntgenbildgeber 14. In der Röntgenquelle 13 befindet sich eine zumindest näherungsweise punktförmige Strahlungsquelle, deren grafisch angedeutete Strahlen in Form einer Zentralprojektion auf den als ebene Platte ausgebildeten Röntgenbildgeber 14 treffen. Der Röntgenbildgeber 14 ist als Pixelmatrix ausgebildet, welche mittels einer nachgeschalteten, schematisch angedeuteten Steuereinheit 15 fein aufgelöste Graustufenbilder in Abhängigkeit der Intensität der auftreffenden Röntgenstrahlung erzeugt. Die Röntgenstation 9 und insbesondere die Steuereinheit 15 sind als erfindungsgemäße Vorrichtung dazu ausgelegt, das nachfolgend beschriebene erfindungsgemäße Verfahren auszuführen:
Vor Beginn eines weiter unten im Zusammenhang mit Fig. 4 beschriebenen laufenden Produktions- und Messbetriebes wird zunächst eine Kalibrierroutine durchgeführt. Ein erster Schritt dieser Kalibrierroutine ist in Fig. 1 dargestellt. Hierbei sind die Form-, Füll- und Siegelstationen 6, 7, 8 zunächst noch außer Betrieb und ohne Funktion. In der Röntgenstation 9 befindet sich zwischen der Röntgenquelle 13 und dem Röntgenbildgeber 14 keinerlei Verpackungsmaterial. Die Bildkette, welche die Röntgenquelle 13 und den Röntgenbildgeber 14 umfasst, wird nun kalibriert. Mittels der Röntgenquelle 13 und des Röntgenbildgebers 14 wird hierzu ein erster, vorgeschalteter Satz von Röntgenaufnahmen erstellt. Da keinerlei Verpackungsmaterial oder dergleichen zwischen der Röntgenquelle 13 und dem Röntgenbildgeber 14 positioniert ist, werden auf diese Weise superponierte Bilder einer homogenen Fläche aufgenommen. Hierdurch wird auf der Fläche des Röntgenbildgebers 14 eine latent vorhandene ungleichmäßige Helligkeitsverteilung ermittelt. Diese dient einer nunmehr ausgeführten Grauwert-Kalibrierungsroutine, so dass an jeden einzelnen Pixeln des Röntgenbildgebers 14 von gleichermaßen kalibrierten Grauwerten ausgegangen werden kann.

Fig. 2 zeigt die Anordnung nach Fig. 1 beim nächsten Schritt der Kalibrierroutine. Hierzu werden zunächst mindestens eine, im gezeigten bevorzugten Ausführungsbeispiel mehrere, hier matrixförmig angeordnete erste Referenzverpackungen 1 hergestellt. Diese ersten Referenzverpackungen 1 sind leer, weisen also keinerlei Inhalt auf. Sie sind aus dem gleichen Material und in gleicher Konfiguration aufgebaut wie die nachfolgend noch beschriebenen zweiten Referenzverpackungen 2 (Fig. 3) sowie die im späteren laufenden Betrieb erzeugten Folienverpackungen 3 (Fig. 4). Sie umfassen jeweils mindestens eine metallische Folienschicht 4, 5. Im gezeigten Ausführungsbeispiel sind sie durch eine untere metallische Folienschicht 4 und eine obere metallische Folienschicht 5 gebildet. Der Begriff metallische Folienschicht bedeutet in diesem Zusammenhang, dass Metall wie Aluminium oder dergleichen in einer solchen Weise flächig verteilt zum Einsatz kommt, dass es bei einer späteren Röntgendurchleuchtung für die Bildgebung relevant ist. Es kann sich also um reine Metallfolien handeln. Natürlich können auch Metallfolien mit Papier- oder Kunststoffkaschierung zum Einsatz kommen, was auch Beschichtungen mit Siegelkleber oder dergleichen beinhaltet. Im gezeigten Ausführungsbeispiel handelt es sich bei beiden Folienschichten 4, 5 um metallische Folienschichten. Ebenso ist es aber denkbar, dass nur eine davon als metallische Folienschicht ausgebildet ist. In jedem Falle gilt das hier Gesagte nicht nur für die Ausbildung der hier im Zusammenhang mit Fig. 2 beschriebenen ersten Referenzverpackungen 1, sondern auch für die später im Zusammenhang mit den Fig. 3 und 4 beschriebenen zweiten Referenzverpackungen und auch für die im späteren laufenden Betrieb erzeugten Folienverpackungen 3.

Zunächst wird die untere Folienschicht 4 von einer Rolle abgezogen und der Formstation 6 zugeführt. Diese umfasst eine Anzahl von Formmulden 10 mit zugehörigen Formstempeln 11. Es kann sich um eine einzelne Formmulde 10 und einen einzelnen zugehörigen Formstempel 11 handeln. Bevorzugt kommen mehrere Formmulden 10 und zugehörige Formstempel 11 zum Einsatz, die beispielsweise in einer Reihe oder, wie hier gezeigt, in Form einer Matrix angeordnet sind. Durch eine Hubbewegung der Stempel 11 tauchen diese unter Zwischenlage der unteren Folienschicht 4 in die Formmulden 10 ein. Hierdurch erfährt die untere metallische Folienschicht 4 eine Kaltverformung derart, dass nun eine matrixförmige Gruppe bzw. ein Satz von Füllräumen 18 gleichzeitig in die untere Folienschicht 4 eingeprägt wird. Unterhalb der Formstation 6 ist schematisch eine Draufsicht der unteren Folienschicht 4 gezeigt, demnach die Füllräume 18 in der genannten Matrixform angeordnet sind und jeweils eine hier nur beispielhaft kreisrunde Grundfläche 19 aufweisen. Natürlich kann jede beliebige andere geeignete Form einer Grundfläche 19 gewählt werden. Jedenfalls sind die einzelnen Füllräume 18 mit ihren Grundflächen 19 jeweils von einem unmittelbar angrenzenden Randbereich 20 umgeben.

Die auf diese Weise mit eingeprägten Füllräumen 18 versehene untere Folienschicht 4 wird nun in einer durch einen Pfeil 21 angegebenen Vorschubrichtung zur Siegelstation 8 geführt. Hierbei passiert sie die dazwischen positionierte Füllstation 7, welche jedoch im vorliegenden Verfahrensschritt funktionslos bleibt. Die Füllräume 18 erhalten keinerlei Füllung. An der Siegelstation 8 wird die obere Folienschicht 5 von einer Rolle abgezogen und auf die untere Folienschicht 4 derart aufgelegt, dass sie die nach oben zunächst noch offenen Füllräume 18 abdeckt. Siegelstempel 12 der Siegelstation 8 siegeln nun die obere Folienschicht 5 im bekannten Heißsiegelverfahren auf die Randbereiche 20 der unteren Folienschicht 5, so dass ein Satz von ersten Referenzverpackungen 1 ohne Inhalt entsteht.

Ein solcher Satz von geschlossenen ersten Referenzverpackungen 1, dessen einzelne Referenzverpackungen 1 in der bei der Formstation 6 schematisch angedeuteten Matrixform positioniert sind, wird nun in der Vorschubrichtung 21 der Röntgenstation 9 zugeführt und zwischen der Röntgenquelle 13 und dem Röntgenbildgeber 14 positioniert. Dort angekommen und angehalten wird dieser Satz von ersten Referenzverpackungen 1 mittels der Röntgenquelle 13 durchleuchtet, so dass auf dem Röntgenbildgeber 14 ein erster Satz von initialen Röntgenaufnahmen entsteht. Hieraus wird in der Steuereinheit 15 eine über die Fläche des Röntgenbildgebers 14 bzw. über die Fläche des Satzes von ersten Referenzverpackungen 1 verteilte Massenkalibrier-Signatur abgeleitet. Diese entspricht der Grauwertverteilung, wie sie durch einen Satz von leeren Verpackungen erzeugt wird, ohne dass ein etwa vorhandener Inhalt die genannte Grauwertverteilung beeinflusst.

Hierauf folgt nun der nächste Verfahrensschritt im Rahmen der Kalibrierroutine, wie er in Fig. 3 dargestellt ist. Hierzu wird zunächst ein Satz von geschlossenen zweiten Referenzverpackungen 2 hergestellt. Diese Herstellung erfolgt aus den gleichen Folienschichten 4, 5 nach dem gleichen Herstellverfahren wie in Fig. 2 in ebenfalls gleicher Anzahl und räumlicher Anordnung, hier also in der gleichen Matrixform. Der einzige Unterschied besteht darin, dass nun nach der Formgebung in der Formstation 6, aber noch vor Erreichen der Siegelstation 8 die Füllstation 7 zum Einsatz kommt. Mittels der Füllstation 7 wird ein Referenzinhalt 16 in alle Füllräume 18 des Satzes von zweiten Referenzverpackungen 2 eingefüllt. Bei dem Referenzinhalt 16 handelt es sich insbesondere um das gleiche Material wie beim später eingefüllten Inhalt 17 der Folienverpackungen 3 im laufenden Produktionsbetrieb (Fig. 4). Jedenfalls liegt nach dem Absiegeln an der Siegelstation 8 ein Satz von geschlossenen zweiten Referenzverpackungen 2 vor, wobei die einzelnen Referenzverpackungen 2 jeweils im Unterschied zu den ersten Referenzverpackungen 1 nach Fig. 2 nicht leer sind, sondern einen Referenzinhalt 16 beinhalten.

Dieser Satz von geschlossenen zweiten Referenzverpackungen 2 wird nun in der Vorschubrichtung 21 zur Röntgenstation 9 geführt, wo er zwischen der Röntgenquelle 13 und dem Röntgenbildgeber 14 zu liegen kommt und angehalten wird. Wie auch bei den ersten Referenzverpackungen 1 erfolgt nun eine Durchleuchtung des Satzes von zweiten Referenzverpackungen 2 mittels der Röntgenquelle 13, wobei mittels des Röntgenbildgebers 14 ein zweiter Satz von initialen Röntgenaufnahmen erstellt wird. Aus letzterem wird nun in der Steuereinheit 15 wiederum eine Signatur, diesmal eine initiale Referenz-Signatur abgeleitet. Im Unterschied zur oben beschriebenen Massenkalibrier-Signatur entspricht die initiale Referenz-Signatur aber derjenigen Grauwertverteilung, welche durch die Summe des Verpackungsmaterials und der jeweiligen Referenzinhalte 16 erzeugt wird.

Im Rahmen der Erfindung wurde erkannt, dass die Formmulden 10, die Formstempel 11 und die dadurch erzeugten lokalen Umformungen der unteren Folienschicht 4 untereinander toleranzbehafteten Abweichungen in einem solchen Umfang unterliegen, dass dies für die Messwertbildung relevant ist. Sinngemäß das Gleiche gilt auch beispielsweise für örtlich variierende Einflüsse beim Versiegeln in der Siegelstation 8. Solche lokalen Abweichungen bzw. örtlichen Verteilungen finden sich innerhalb eines Verpackungssatzes als statische Signaturunterschiede im Vergleich der einzelnen Referenzverpackungen 1, 2 bzw. Folienverpackungen 3 untereinander wieder. Außerdem sind die statischen Signaturunterschiede bei der Herstellung der ersten Referenzverpackungen 1, der Herstellung der zweiten Referenzverpackungen 2 sowie der weiter unten beschriebenen Herstellung der regulären Folienverpackungen 3 innerhalb eines Satzes von Verpackungen bzw. innerhalb einer Matrix davon reproduzierbar, kehren also bei jedem Herstellungsschritt wieder. Es folgt deshalb eine Differenzbildung aus der hier beschriebenen initialen Referenz-Signatur mit Füllungseinfluss und der weiter oben im Zusammenhang mit Fig. 2 beschriebenen Massenkalibrier-Signatur ohne Füllungseinfluss. Infolge der Differenzbildung heben sich die gleich gebliebenen statischen Signaturunterschiede der Referenz-Signatur und der Massenkalibrier-Signatur gegenseitig auf, wodurch der Einfluss der Folienschichten 4, 5 eliminiert wird. Die Differenzbildung lässt lediglich Referenz-Messwerte übrig, die den einzelnen Referenzinhalten 16 zugeordnet werden können. Außerdem werden noch die Einzelmassen der einzelnen Referenzinhalte 16 durch Wiegen als jeweilige Referenz-Masse quantitativ ermittelt und den vorgenannten Referenz-Messwerten zugeordnet. Mit anderen Worten werden für jede Reihe, Matrix oder sonstige Anordnung der gleichzeitig gehandhabten Verpackungen Gruppen der Tupel aus Füllmasse und Referenz-Messwerte (Referenzgrauwertsummen) gebildet und hieraus gruppenspezifische Regressionsfunktionen berechnet.

Es erfolgt noch eine weiter unten beschriebene Linearisierung, so dass ein linearer Zusammenhang zwischen Referenz-Messwert und Referenz-Masse hergestellt werden kann. Die Kalibrierroutine wird nun abgeschlossen.

Nach abgeschlossener Kalibrierroutine erfolgt der laufende Produktions- und Messbetrieb. Hierbei werden Folienverpackungen 3 mit einzelnen Inhalten 17 hergestellt und in der Röntgenstation 9 entsprechend Fig. 3 einer 100%igen In-Prozess-Kontrolle mit quantitativer Massebestimmung unterzogen. Die Herstellung der Folienverpackungen 3 mit den jeweiligen Inhalten 17 erfolgt analog zur Herstellung der zweiten Referenzverpackungen 2 mit den Referenzinhalten 16, was auch die Anzahl und Verteilung der Füllräume 18 mit ihren Grundflächen 19 und Randebereichen 20 innerhalb eines gleichzeitig hergestellten Satzes von Folienverpackungen 3 bzw. zweiten Referenzverpackungen 2 einschließt. Auch das Material der Folienschichten 4, 5 ist gleich. Es wird deshalb an dieser Stelle auf die gleichermaßen anwendbare Beschreibung zu Fig. 3 verwiesen. Der einzige Unterschied besteht darin, dass für die Kalibrieroutine jeweils ein Satz von ersten Referenzverpackungen 1 und zweiten Referenzverpackungen 2 ausreicht, während im laufenden Betrieb gemäß Fig. 4 getaktet nacheinander eine beliebige Anzahl von Sätzen von Folienverpackungen 3 hergestellt und geprüft wird.

Ein zusammenhängender Satz von Folienverpackungen 3 wird analog zur Darstellung nach Fig. 3 im laufenden Betrieb der Röntgenstation 9 zugeführt und dort zwischen der Röntgenquelle 13 und dem Röntgenbildgeber 14 positioniert. Dort wird das zusammenhängende Band von Folienverpackungen 3 angehalten. Den einzelnen Folienverpackungen 3 wird je eine Identifikationsnummer zugeordnet.

Analog zum Verfahrensschritt nach Fig. 3 werden nun die geschlossenen Folienverpackungen 3 mit jeweils einem Inhalt 17 mittels der Röntgenquelle 13 durchleuchtet, so dass am Röntgenbildgeber 14 ein Satz von messenden Röntgenaufnahmen erstellt wird. Hieraus wird in der Steuereinheit 15 eine Mess-Signatur abgeleitet. Diese stellt sich als Grauwertverteilung dar, die den einzelnen Folienverpackungen 3 und deren Inhalten 17 entspricht. Die hierzu erforderlichen Berechnungsschritte wie auch die nachfolgend noch beschriebenen Schritte werden zur Zeiteinsparung bevorzugt dann ausgeführt, wenn die Steuereinheit 15 bereits den nächsten Bearbeitungstakt initiiert hat, innerhalb dessen der nächste Satz von gefüllten Folienverpackungen 3 der Röntgenstation 9 zugeführt wird. Natürlich kann es auch zweckmäßig sein, den soeben durchleuchteten Satz von Folienverpackungen 3 so lange in der Röntgenstation 9 zu belassen, bis die Auswertung der Massebestimmung abgeschlossen ist.

Analog zum letzten Verfahrensschritt der Kalibrierroutine gemäß Fig. 3 erfolgt nun auch im laufenden Messbetrieb gemäß Fig. 4 eine Differenzbildung, diesmal aber aus der soeben erzeugten Mess-Signatur mit Einfluss der Inhalte 17 und der Massenkalibrier-Signatur ohne Einfluss irgendwelcher Inhalte gemäß Fig. 2. Auch hierbei werden analog zur Darstellung nach Fig. 3 statische Signaturunterschiede bzw. Signaturverteilungen zwischen den einzelnen Füllräumen 18 eliminiert. Die Differenzbildung lässt allein Messwerte übrig, die den einzelnen Inhalten 17 der einzelnen Folienverpackungen 3 sowie den zugehörigen Identifikationsnummern zugeordnet werden können. Da außerdem im Kalibrierschritt nach Fig. 3 eine Zuordnung von Referenz-Masse zu Referenz-Messwert vorgenommen wurde und entsprechende Regressionsfunktionen ermittelt wurden, kann hierauf aufbauend aus den aktuellen Messwerten eine quantitative Bestimmung der Massen der einzelnen Inhalte 17 mit hoher Genauigkeit vorgenommen werden.

Die vorstehend beschriebenen Verfahrensschritte berücksichtigen zwar die statischen, immer wiederkehrenden Signaturunterschiede zwischen den verschiedenen Referenzverpackungen 1, 2 oder Folienverpackungen 3 innerhalb eines einzelnen Satzes davon, nicht aber zeitliche Schwankungen, die durch Helligkeitsschwankungen in der Bildkette der Röntgenstation 9 oder durch Dickenschwankungen in den Folienschichten 4, 5 entstehen. Diese zeitlichen Schwankungen können jedoch eliminiert werden, indem die Massenkalibrier-Signatur nach Fig. 2, die Referenz-Signatur nach Fig. 3 und die Mess-Signatur nach Fig. 4 in analoger Weise wie folgt ermittelt werden: Aus den Fig. 2, 3 und 4 und der schematischen Blockdarstellung im Bereich der jeweiligen Formstation 6 ergibt sich, dass die einzelnen Referenzverpackungen 1, 2 und auch Folienverpackungen 3 jeweils Füllräume 18 mit einer Grundfläche 19 aufweisen, und dass diese Grundflächen 19 unmittelbar angrenzend daran von Randbereichen 20 umgeben sind. In allen drei Fällen wird zunächst ein erstes Summensignal ermittelt, was die Grauwertsumme bzw. das Integral der Grauwerte über der jeweiligen Grundfläche 19 darstellt. Außerdem wird ein zweites Summensignal ermittelt, was den unmittelbar angrenzenden Randbereich 20 abdeckt und die lokale Grauwertsumme bzw. das Integral der Grauwerte über dem Randbereich 20 darstellt. Durch Differenzbildung zwischen dem jeweiligen ersten und zweiten Summensignal wird nun die Massenkalibrier-Signatur nach Fig. 2, die Referenz-Signatur nach Fig. 3 bzw. die Mess-Signatur nach Fig. 4 ermittelt. Da sich die oben genannten zeitlichen Helligkeitsschwankungen zumindest im Bereich einer einzelnen Referenzverpackung 1, 2 oder einer einzelnen Folienverpackung 3 gleichermaßen auf das zugehörige erste Summensignal und das zugehörige zweite Summensignal auswirken, werden diese Auswirkungen durch die genannte Differenzbildung vollständig eliminiert.

Natürlich setzt dies voraus, dass genau zwischen der Grundfläche 19 des Füllraumes 18 und dem umgebenden Randbereich 20 unterschieden werden kann. Aus Messungen von Referenzverpackungen 1, 2 oder Folienverpackungen 3 werden deshalb zunächst Bildsignaturen abgeleitet, die charakteristisch für die Position der Grundflächen 19 der Füllräume 18 sind. Über ein sogenanntes "pattern matching" können nun anhand dieser charakteristischen, sozusagen idealtypischen Bildsignaturen Positionsbestimmungen bzw. Positionskorrekturen für die Grundfläche 19 rechnerisch vorgenommen werden, so dass die ersten und die zweiten Summensignale exakt definiert ermittelt und voneinander getrennt werden können.

Nach der Erfindung hat sich eine Linearisierung der ersten und zweiten Summensignale als nützlich herausgestellt. Es besteht dann ein linearer Zusammenhang zwischen den nach Fig. 4 für die einzelnen Füllräume 18 ermittelten Grauwerten bzw. Messewerten und den Massen der jeweils darin befindlichen Inhalte 17.

Jedenfalls wird im Rahmen einer 100%igen In-Prozess-Kontrolle für jeden einzelnen Inhalt 17 der Füllräume 18 sämtlicher Folienverpackungen 3 trotz des Vorhandenseins mindestens einer metallischen Folienschicht 4, 5 eine exakte quantitative Massebestimmung vorgenommen. Die jeweiligen numerischen Masse- bzw. Gewichtswerte werden nun den einzelnen Identifikationsnummern der einzelnen Folienverpackungen 3 zugeordnet. Für jede einzelne Folienverpackung 3 kann also eine Aussage getroffen werden, welche Masse ihr Inhalt hat, und/oder ob jeweils ein Inhalt 17 mit der gewünschten Masse innerhalb einer vorgesehenen Toleranz vorhanden ist oder nicht.

## Patentansprüche

1. Verfahren zur quantitativen Massebestimmung des Inhaltes (17) von geschlossenen Folienverpackungen (3), wobei die einzelnen Folienverpackungen (3) jeweils mindestens eine metallische Folienschicht (4, 5) und Füllräume (18) mit einer Grundfläche (19) aufweisen, umfassend folgende Verfahrensschritte:
- In einer Kalibrierroutine wird mindestens eine geschlossene erste Referenzverpackung (1) ohne Inhalt mittels einer Röntgenquelle (13) durchleuchtet, und es wird davon ein erster Satz von initialen Röntgenaufnahmen erstellt;
- Aus dem ersten Satz von initialen Röntgenaufnahmen wird eine Massenkalibrier-Signatur abgeleitet;
- Mindestens eine geschlossene zweite Referenzverpackung (2) mit einem Referenzinhalt (16) wird mittels der Röntgenquelle (13) durchleuchtet, und es wird davon ein zweiter Satz von initialen Röntgenaufnahmen erstellt;
- Aus dem zweiten Satz von initialen Röntgenaufnahmen wird eine initiale Referenz-Signatur abgeleitet;
- Aus der initialen Referenz-Signatur und der Massenkalibrier-Signatur wird durch Differenzbildung ein Referenz-Messwert abgeleitet;
- Die Masse des Referenzinhaltes (16) der mindestens einen zweiten Referenzverpackung (2) wird durch Wiegen als Referenz-Masse quantitativ ermittelt und dem Referenz-Messwert zugeordnet;
- Die Kalibrierroutine wird abgeschlossen, und es folgt ein laufender Messbetrieb;
- Im laufenden Messbetrieb werden geschlossene Folienverpackungen (3) mit je einem Inhalt (17) mittels der Röntgenquelle (13) durchleuchtet, und es wird davon mindestens ein Satz von messenden Röntgenaufnahmen erstellt;
- In dem mindestens einen Satz von messenden Röntgenaufnahmen werden innerhalb der Grundfläche (19) ein erstes Summensignal und in einem Randbereich (20) der Folienverpackung (3) außerhalb der Grundfläche (19) ein zweites Summensignal ermittelt und linearisiert, wobei eine Mess-Signatur durch Differenzbildung zwischen dem ersten und dem zweiten Summensignal ermittelt wird;
- Aus der Mess-Signatur und der Massenkalibrier-Signatur werden durch Differenzbildung Messwerte für die einzelnen geschlossenen Folienverpackungen (3) abgeleitet;
- Aus den Messwerten werden unter Berücksichtigung der Zuordnung von Referenz-Masse zum Referenz-Messwert die Massen der Inhalte (17) der geschlossenen Folienverpackungen (3) quantitativ bestimmt.

2. Verfahren nach Anspruch 1,
**dadurch gekennzeichnet, dass** im laufenden Messbetrieb von mehreren insbesondere in Matrixform angeordneten Folienverpackungen (3) gemeinsam ein Satz von messenden Röntgenaufnahmen erstellt wird, und dass in der vorangehenden Kalibrierroutine von Referenzverpackungen (1, 2) mit und ohne Referenzinhalt (16) in gleicher Anzahl und gleicher räumlicher Anordnung erste und zweite Sätze von initialen Röntgenaufnahmen erstellt werden.

3. Verfahren nach Anspruch 1 oder 2,
**dadurch gekennzeichnet, dass** zu Beginn der Kalibrierroutine eine Kalibrierung der Bildkette mittels eines vorgeschalteten Satzes von Röntgenaufnahmen ohne Referenzverpackungen (1, 2) durchgeführt wird.

4. Verfahren nach einem der Ansprüche 1 bis 3,
**dadurch gekennzeichnet, dass** aus dem Satz von messenden Röntgenaufnahmen Bildsignaturen abgeleitet werden, die charakteristisch für die Position der Grundflächen (19) der Füllräume (18) sind, und dass hieraus Positionskorrekturen für die Ermittlung der ersten und zweiten Summensignale vorgenommen werden.

5. Vorrichtung zur quantitativen Massebestimmung des Inhaltes von geschlossenen Folienverpackungen (3), umfassend eine Röntgenstation (9) mit einer Röntgenquelle (13), mit einem Röntgenbildgeber (14) und mit einer Steuereinheit (15) ausgelegt zur Ausführung des Verfahrens nach einem der Ansprüche 1 bis 4.

## Claims

1. Method for the quantitative determination of the mass of the content (17) of closed foil packages (3), wherein each of the individual foil packages (3) has a metallic foil layer (4, 5) and filling spaces (18) with a base surface (19), the method comprising the following procedural steps:
- in a calibration routine at least one closed first reference package (1) without content is x-rayed by means of an x-ray source (13) and a first set of initial x-ray images is produced therefrom;
- a mass calibration signature is derived from the first set of initial x-ray images;
- at least one closed second reference package (2) with a reference content (16) is x-rayed by means of the x-ray source (13) and a second set of initial x-ray images is produced therefrom;
- an initial reference signature is derived from the second set of initial x-ray images;
- a reference measured value is derived from the initial reference signature and the mass calibration signature;
- the mass of the reference content (16) of the at least one second reference package (2) is quantitatively determined as reference mass by weighing and assigned to the reference measured value;
- the calibration routine is terminated, followed by an ongoing measuring operation;
- in the ongoing measuring operation closed foil packages (3) with a content (17) each are x-rayed by means of the x-ray source (13) and at least one set of measuring x-ray images is produced therefrom;
- in the at least one set of measuring x-ray images, a first composite signal is determined and linearised within the base surface (19) and a second composite signal is determined and linearised in a marginal region (20) of the foil package (3) outside the base surface (19), wherein a measurement signature is determined by differentiation between the first and the second composite signal;
- from the measurement signature and the mass calibration signature, measured values are derived for the individual closed foil packages (3) by differentiation;
- from the measured values, the masses of the contents (17) of the closed foil packages (3) are quantitatively determined, taking account of the assignment of the reference mass to the reference measured value.

2. Method according to claim 1,
**characterised in that**, in the ongoing measuring operation of several foil packages (3) arranged in matrix form in particular, a set of measuring x-ray images is jointly produced, and **in that**, in the preceding calibration routine of reference packages (1, 2) with and without reference content (16), first and second sets of initial X-ray images are created in the same number and the same spatial arrangement.

3. Method according to claim 1 or 2,
**characterised in that**, at the start of the calibration routine, a calibration of the image chain is performed by means of a preceding set of X-ray images without reference packages (1, 2).

4. Method according to any of claims 1 to 3,
**characterised in that** image signatures characteristic of the position of the base surface (19) of the filling spaces (18) are derived from measuring x-ray images, and **in that** position corrections are made therefrom for determining the first and second composite signals.

5. Device for the quantitative determination of the mass of the content (17) of closed foil packages (3), comprising an X-ray station (9), with an X-ray source (13), with an X-ray image transducer (14) and with a control unit (15), designed for carrying out the method according to any of claims 1 to 4.

## Revendications

1. Procédé pour la détermination quantitative de masse du contenu (17) d'emballages en feuille fermés (3), dans lequel les emballages en feuille (3) individuels présentent respectivement au moins une couche de feuille métallique (4, 5) et des espaces de remplissage (18) avec une surface de base (19), comprenant les étapes de procédé suivantes :
- dans une routine de calibrage, on radiographie au moins un premier emballage de référence fermé (1) sans contenu au moyen d'une source de rayons X (13), et l'on établit à partir de cela un premier jeu de radiographies initiales ;
- du premier jeu de radiographies initiales, on déduit une signature de calibrage de masse ;
- on radiographie au moins un deuxième emballage de référence fermé (2) comprenant un contenu de référence (16) au moyen de la source de rayons X (13), et l'on établit à partir de cela un deuxième jeu de radiographies initiales ;
- du deuxième jeu de radiographies initiales, on déduit une signature de référence initiale ;
- de la signature de référence initiale et la signature de calibrage de masse, on déduit une valeur de mesure de référence par formation de différence ;
- on détermine quantitativement par pesage la masse du contenu de référence (16) du au moins un deuxième emballage de référence (2) en tant que masse de référence et on l'associe à la valeur de mesure de référence ;
- on termine la routine de calibrage, et suit un fonctionnement de mesure continue ;
- lors du fonctionnement de mesure continue, on radiographie des emballages en feuille fermés (3) comprenant chacun un contenu (17) au moyen de la source de rayons X (13), et l'on établit à partir de cela au moins un jeu de radiographies de mesure ;
- dans le au moins un jeu de radiographies de mesure, on détermine et on linéarise un premier signal de somme à l'intérieur de la surface de base (19) et un deuxième signal de somme dans une zone de bord (20) de l'emballage en feuille (3) à l'extérieur de la surface de base (19), une signature de mesure étant déterminée par formation de différence entre les premier et deuxième signaux de somme ;
- de la signature de mesure et la signature de calibrage de masse on déduit par formation de différence des valeurs de mesure pour les emballages en feuille fermés (3) individuels ;
- des valeurs de mesure, on détermine quantitativement les masses des contenus (17) des emballages en feuille fermés (3) en tenant compte de l'association de la masse de référence à la valeur de mesure de référence.

2. Procédé selon la revendication 1,
**caractérisé en ce que** lors du fonctionnement de mesure continue de plusieurs emballages en feuille (3) disposés en particulier sous forme de matrice, on établit un jeu de radiographies de mesure commun, et **en ce qu'**on établit lors de la routine de calibrage précédente d'emballages de référence (1, 2) avec et sans contenu de référence (16) en nombre égal et avec une même disposition dans l'espace de premier et deuxième jeux de radiographies initiales.

3. Procédé selon la revendication 1 ou 2,
**caractérisé en ce qu'**au début de la routine de calibrage, on effectue un calibrage de la chaîne d'image au moyen d'un jeu de radiographies sans emballage de référence (1, 2) prévu en amont.

4. Procédé selon l'une des revendications 1 à 3,
**caractérisé en ce qu'**à partir du jeu de radiographies de mesure, on déduit des signatures d'image qui sont caractéristiques de la position des surfaces de base (19) des espaces de remplissage (18), et **en ce qu'**à partir de là, on réalise des corrections de position pour la détermination des premier et deuxièmes signaux de somme.

5. Dispositif pour la définition quantitative de masse du contenu d'emballages en feuille fermés (3), comprenant une station de radiographie (9) comprenant une source de rayons X (13), avec un générateur de radiographie (14) et avec une unité de commande (15) conçue pour réaliser le procédé selon l'une des revendications 1 à 4.
